# EUROPEAN PATENT APPLICATION

(11) **EP 4 030 521 A1**
(43) Date of publication of application: **20.07.2022**
(21) Application number: 20863732.2
(22) Date of filing: 21.07.2020
(51) Int. Cl.: H01M 10/052, H01M 10/0567, H01M 10/0569

(54) **NON-AQUEOUS ELECTROLYTE POWER STORAGE ELEMENT AND POWER STORAGE DEVICE**

(30) Priority: 11.09.2019 JP 2019165770
(71) Applicant: GS Yuasa International Ltd., Kisshoin, Minami-ku, Kyoto-shi, Kyoto 601-8520 (JP)
(72) Inventor: MURAMATSU, Hiromasa, Kyoto-shi, Kyoto 601-8520 (JP)
(74) Representative: Isarpatent
(86) International application number: PCT/JP2020/028257
(87) International publication number: WO 2021/049178

(57) **Abstract**

The nonaqueous electrolyte energy storage device according to an aspect of the present invention includes a negative electrode, a positive electrode, and a nonaqueous electrolyte, and in the nonaqueous electrolyte energy storage device, the negative electrode includes a negative active material layer containing lithium metal, the nonaqueous electrolyte contains a fluorinated cyclic carbonate, a chain carbonate, and a sulfur-based cyclic compound, and the content of the fluorinated cyclic carbonate in the entire solvent of the nonaqueous electrolyte exceeds 20% by volume.

## Description

### TECHNICAL FIELD

The present invention relates to a nonaqueous electrolyte energy storage device and an energy storage apparatus.

### BACKGROUND ART

Nonaqueous electrolyte secondary batteries typified by lithium ion secondary batteries are widely used for electronic devices such as personal computers and communication terminals, motor vehicles, and the like since these secondary batteries have a high energy density. The nonaqueous electrolyte secondary batteries generally include a pair of electrodes, which are electrically separated from each other by a separator, and a nonaqueous electrolyte interposed between the electrodes, and are configured to allow ions to be transferred between the electrodes for charge-discharge. Capacitors such as lithium ion capacitors and electric double-layer capacitors are also widely used as nonaqueous electrolyte energy storage devices other than nonaqueous electrolyte secondary batteries.

In recent years, in order to increase the capacity of nonaqueous electrolyte secondary batteries, it has been required to increase the capacity of the negative electrode. Lithium metal has a significantly larger discharge capacity per active material mass than graphite, which is currently widely used as a negative active material for lithium ion secondary batteries. Therefore, a nonaqueous electrolyte secondary battery containing metal lithium as a negative active material has been proposed (see JP-A-2011-124154).

### PRIOR ART DOCUMENT

### PATENT DOCUMENT

Patent Document 1: JP-A-2011-124154

### SUMMARY OF THE INVENTION

### PROBLEMS TO BE SOLVED BY THE INVENTION

However, nonaqueous electrolyte secondary batteries containing lithium metal in the negative electrode have a disadvantage that the volume thereof is likely to increase. It is presumed that this is because the nonaqueous electrolyte is continuously reduced and decomposed on the active lithium metal continuously generated as the lithium metal negative electrode is dissolved and precipitated during charge-discharge and the gas, which is a decomposition product, is accumulated.

The present invention has been made in view of the circumstances as described above, and an object thereof is to provide a nonaqueous electrolyte energy storage device of which an increase in volume can be suppressed and an energy storage apparatus.

### MEANS FOR SOLVING THE PROBLEMS

An aspect of the present invention made to solve the problems is a nonaqueous electrolyte energy storage device including a negative electrode, a positive electrode, and a nonaqueous electrolyte, in which the negative electrode includes a negative active material layer containing lithium metal, the nonaqueous electrolyte contains a fluorinated cyclic carbonate, a chain carbonate, and a sulfur-based cyclic compound, and the content of the fluorinated cyclic carbonate in the entire solvent of the nonaqueous electrolyte exceeds 20% by volume.

Another aspect of the present invention is an energy storage apparatus including a plurality of the nonaqueous electrolyte energy storage devices.

### ADVANTAGES OF THE INVENTION

According to the present invention, it is possible to provide a nonaqueous electrolyte energy storage device of which an increase in volume can be suppressed and an energy storage apparatus.

### BRIEF DESCRIPTION OF THE DRAWINGS

Fig. 1 is a perspective view illustrating a nonaqueous electrolyte energy storage device according to an embodiment of the present invention.
Fig. 2 is a schematic view illustrating an energy storage apparatus configured by assembling a plurality of the nonaqueous electrolyte energy storage devices according to an embodiment of the present invention.

### MODE FOR CARRYING OUT THE INVENTION

The nonaqueous electrolyte energy storage device according to an embodiment of the present invention is a nonaqueous electrolyte energy storage device including a negative electrode, a positive electrode, and a nonaqueous electrolyte, in which the negative electrode includes a negative active material layer containing lithium metal, the nonaqueous electrolyte contains a fluorinated cyclic carbonate, a chain carbonate, and a sulfur-based cyclic compound, and the content of the fluorinated cyclic carbonate in the entire solvent of the nonaqueous electrolyte exceeds 20% by volume.

According to the nonaqueous electrolyte energy storage device, the nonaqueous electrolyte contains a fluorinated cyclic carbonate, a chain carbonate, and a sulfur-based cyclic compound and the content of the fluorinated cyclic carbonate in the entire solvent of the nonaqueous electrolyte exceeds 20% by volume, and it is thus possible to suppress an increase in volume of the nonaqueous electrolyte energy storage device. The reason for this is not clear, but is presumed as follows. As described above, the reason why the volume of nonaqueous electrolyte secondary batteries containing lithium metal in the negative electrode increases is presumed to be because the nonaqueous electrolyte is continuously reduced and decomposed on the active lithium metal continuously generated as the negative electrode containing lithium metal is dissolved and precipitated during charge-discharge and the gas, which is a decomposition product, is accumulated. In other words, in nonaqueous electrolyte secondary batteries containing lithium metal, when the nonaqueous electrolyte comes into contact with the lithium metal, the nonaqueous electrolyte is reduced and decomposed to form a film on the surface of the lithium metal and thus further continuous reduction and decomposition of the nonaqueous electrolyte on the lithium metal is suppressed. However, when the negative electrode containing lithium metal is dissolved and precipitated during charge-discharge, active lithium metal on which a film is not formed is continuously generated each time. Hence, unlike the case of a negative electrode containing a carbon material such as graphite as the negative active material, the case of a nonaqueous electrolyte secondary battery containing lithium metal in the negative electrode, the reaction to reduce and decompose the nonaqueous electrolyte continuously occurs on the lithium metal, and the gas, which is a decomposition product, is also continuously generated.

According to an embodiment of the present invention, the content of the fluorinated cyclic carbonate contained in the nonaqueous electrolyte exceeds 20% by volume with respect to the entire solvent, thus a film, which is less likely to be reduced and decomposed, is rapidly formed on the lithium metal, continuous reduction and decomposition of the nonaqueous electrolyte on the lithium metal is suppressed, and the amount of gas, which is a decomposition product, generated is diminished. Moreover, the sulfur-based cyclic compound contained as an additive causes a decomposition reaction of the sulfur-based cyclic compound at an appropriate potential on the lithium metal, thus a film, which is less likely to be reduced and decomposed, is rapidly formed on the lithium metal, and the generation of the gas is suppressed. Hence, it is considered that the increase in volume of the nonaqueous electrolyte energy storage device can be suppressed by combining the fluorinated cyclic carbonate with the sulfur-based cyclic compound.

As the content of the fluorinated cyclic carbonate exceeds 20% by volume with respect to the entire solvent, the amount of inactive lithium dendrite, which does not participate in the charge-discharge reaction and is deposited on the lithium metal as charge-discharge is repeated, is effectively diminished, and thus it is suppressed that the negative electrode containing lithium metal becomes inactive. Hence, in addition to the effect of suppressing the increase in volume of the nonaqueous electrolyte energy storage device, it is also possible to increase the discharge capacity retention ratio associated with the charge-discharge cycles.

The fluorinated cyclic carbonate is preferably fluoroethylene carbonate. The fluoroethylene carbonate exhibits high oxidation resistance and can suppress side reactions (oxidative decomposition of nonaqueous solvent and the like) that may occur at the time of charge-discharge of the nonaqueous electrolyte energy storage device. Fluoroethylene carbonate is reduced and decomposed at a relatively noble potential to rapidly form a stable film on the lithium metal and thus can suppress continuous reduction and decomposition of the nonaqueous electrolyte on the lithium metal. Hence, as the fluorinated cyclic carbonate is fluoroethylene carbonate, it is possible to further enhance the effect of suppressing the increase in volume of the nonaqueous electrolyte energy storage device.

In the nonaqueous electrolyte, the sulfur-based cyclic compound is preferably a compound having a sultone structure or a cyclic sulfate structure. As the sulfur-based cyclic compound has the structures, the decomposition reaction of the sulfur-based cyclic compound occurs at a potential nobler than the potential at which the fluorinated cyclic carbonate such as fluoroethylene carbonate is decomposed, and a more stable film is formed on the surface of lithium metal by the decomposition products generated by this reaction. Hence, as the sulfur-based cyclic compound is a compound having a sultone structure or a cyclic sulfate structure, it is possible to further enhance the effect of suppressing the increase in volume of the nonaqueous electrolyte energy storage device.

Hereinafter, the nonaqueous electrolyte energy storage device according to an embodiment of the present invention will be described in detail. The names of the respective constituent members (respective constituent elements) used in the respective embodiments may be different from the names of the respective constituent members (respective constituent elements) used in the background art.

### <Nonaqueous electrolyte energy storage device>

A nonaqueous electrolyte energy storage device according to an embodiment of the present invention includes a negative electrode, a positive electrode, and a nonaqueous electrolyte. Hereinafter, a nonaqueous electrolyte secondary battery will be described as an example of a nonaqueous electrolyte energy storage device. The positive electrode and the negative electrode usually form an electrode assembly in which the positive electrode and the negative electrode are alternately superposed by being stacked or wound with a separator interposed therebetween. This electrode assembly is housed in a case, and a nonaqueous electrolyte is filled in this case. In the nonaqueous electrolyte secondary battery, the above-described nonaqueous electrolyte is used as a nonaqueous electrolyte. The nonaqueous electrolyte is interposed between the positive electrode and the negative electrode. As the case, a known metal case, resin case or the like that is usually used as a case of a nonaqueous electrolyte secondary battery can be used.

### [Negative electrode]

The negative electrode includes a negative electrode substrate and a negative active material layer stacked directly or indirectly on at least one surface of the negative electrode substrate. The negative electrode may include an intermediate layer disposed between the negative electrode substrate and the negative active material layer.

### (Negative electrode substrate)

The negative electrode substrate exhibits conductivity. As the material of the negative electrode substrate, a metal such as copper, nickel, stainless steel or a nickel-plated steel, or an alloy thereof is used. Among these, copper or a copper alloy is preferable. Example of the negative electrode substrate include a foil and a vapor deposited film, and a foil is preferable from the viewpoint of cost. Therefore, the negative electrode substrate is preferably a copper foil or a copper alloy foil. Examples of the copper foil include a rolled copper foil and an electrolytic copper foil. To exhibit "conductivity" means that the volume resistivity measured in conformity with JIS-H0505 (1975) is 1 × 10⁷ Ω·cm or less, and to be "non-conductive" means that the volume resistivity is more than 1 × 10⁷ Ω·cm.

The average thickness of the negative electrode substrate is preferably 2 µm or more and 35 µm or less, more preferably 3 µm or more and 30 µm or less, still more preferably 4 µm or more and 25 µm or less, particularly preferably 5 µm or more and 20 µm or less. When the average thickness of the negative electrode substrate is within the above range, it is possible to increase the energy density per volume of the nonaqueous electrolyte secondary battery while increasing the strength of the negative electrode substrate. The "average thickness of a substrate" refers to a value obtained by dividing the cutout mass in cutout of a substrate having a predetermined area by the true density and cutout area of the substrate.

### (Negative active material layer)

The negative active material layer contains lithium metal as a negative active material. As the negative active material contains lithium metal, the discharge capacity per active material mass can be improved. The lithium metal includes a lithium alloy as well as a simple substance of lithium. Examples of the lithium alloy include lithium-aluminum alloy. The negative electrode containing lithium metal can be fabricated by cutting lithium metal into a predetermined shape or molding lithium metal into a predetermined shape.

The negative active material layer may further contain elements such as Na, K, Ca, Fe, Mg, Si and N.

The lower limit of the content of lithium metal in the negative active material is preferably 80% by mass, more preferably 90% by mass, still more preferably 95% by mass. Meanwhile, the upper limit of this content may be 100% by mass.

### [Positive electrode]

The positive electrode includes a positive electrode substrate and a positive active material layer. The positive active material layer contains a positive active material. The positive active material layer is stacked along at least one surface of the positive electrode substrate directly or with an intermediate layer interposed therebetween.

The positive electrode substrate exhibits conductivity. As the material of the substrate, metals such as aluminum, titanium, tantalum, and stainless steel, or alloys thereof are used. Among these, aluminum and aluminum alloys are preferable from the viewpoint of the balance among electric potential resistance, high conductivity, and cost. Examples of the form of the positive electrode substrate include a foil and a vapor deposited film, and a foil is preferable from the viewpoint of cost. In other words, an aluminum foil is preferable as the positive electrode substrate. Examples of the aluminum or aluminum alloy include A1085P and A3003 prescribed in JIS-H4000 (2014).

The positive active material layer is formed of a so-called positive composite containing a positive active material. The positive composite forming the positive active material layer contains arbitrary components such as a conductive agent, a binder, a thickener, and a filler if necessary.

The positive active material can be appropriately selected from, for example, known positive active materials. As the positive active material for a lithium ion secondary battery, a material capable of storing and releasing lithium ions is usually used. Examples of the positive active material include lithium-transition metal composite oxides having an α-NaFeO₂-type crystal structure, lithium-transition metal oxides having a spinel-type crystal structure, polyanion compounds, chalcogenides, and sulfur. Examples of the lithium-transition metal composite oxides having an α-NaFeO₂-type crystal structure include Li[LiₓNi₁₋ₓ]O₂ (0 ≤ x < 0.5), Li[LiₓNiγCo_{(1-x-γ)}]O₂ (0 ≤ x < 0.5, 0 < γ < 1), Li[LiₓCo₍₁₋ₓ₎]O₂ (0 ≤ x < 0.5), Li[LiₓNi_{γ}Mn_{(1-x-γ)}]O₂ (0 ≤ x < 0.5, 0 < γ < 1), Li[LiₓNi_{γ}Mn_{β}Co_{(1-x-γ-β)}]O₂ (0 ≤ x < 0.5, 0 < γ, 0 < β, 0.5 < γ + β < 1), and Li[LiₓNi_{γ}Co_{β}Al_{(1-x-γ-β)}]O₂ (0 ≤ x < 0.5, 0 < γ, 0 < β, 0.5 < γ + β < 1). However, when a lithium-transition metal composite oxide represented by LiNi_{1/3}Co_{1/3}Mn_{1/3}O₂ is used as the positive active material, the effect of suppressing the increase in volume may be lower than that by other positive active materials. Examples of the lithium-transition metal composite oxides having a spinel-type crystal structure include LiₓMn₂O₄ and LiₓNi_{γ}Mn_{(2-γ)}O₄. Examples of the polyanion compounds include LiFePO₄, LiMnPO₄, LiNiPO₄, LiCoPO₄, Li₃V₂(PO₄)₃, Li₂MnSiO₄, and Li₂CoPO₄F. Examples of the chalcogenides include titanium disulfide, molybdenum disulfide, and molybdenum dioxide. A part of atoms or polyanions in these materials may be substituted with atoms or anion species composed of other elements. The surfaces of these materials may be coated with other materials. In the positive active material layer, one of these materials may be used singly or two or more of these materials may be used in mixture. In the positive active material layer, one of these compounds may be used singly or two or more of these compounds may be used in mixture. The content of the positive active material in the positive active material layer is not particularly limited, but the lower limit thereof is preferably 50% by mass, more preferably 80% by mass, still more preferably 90% by mass. On the other hand, the upper limit of this content is preferably 99% by mass, more preferably 98% by mass.

The conductive agent is not particularly limited as long as it is a material exhibiting conductivity. Examples of such a conductive agent include carbonaceous materials, metals, and conductive ceramics. Examples of the carbonaceous materials include graphitized carbon, non-graphitized carbon, and graphene-based carbon. Examples of the non-graphitized carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and fullerene. Examples of the shape of the conductive agent include a powdery shape and a fibrous shape. As the conductive agent, one of these materials may be used singly or two or more of these materials may be used in mixture. These materials may be composited and used. For example, a material obtained by compositing carbon black with CNT may be used. Among these, carbon black is preferable from the viewpoint of electron conductivity and coatability, and in particular, acetylene black is preferable.

The content of the conductive agent in the positive active material layer is preferably 1% by mass or more and 10% by mass or less, more preferably 3% by mass or more and 9% by mass or less. By setting the content of the conductive agent in the above range, the energy density of the secondary battery can be enhanced.

Examples of the binder include thermoplastic resins such as fluororesin (polytetrafluoroethylene (PTFE), polyvinylidene fluoride (PVDF) and the like), polyethylene, polypropylene, and polyimide; elastomers such as ethylene-propylene-diene rubber (EPDM), sulfonated EPDM, styrene-butadiene rubber (SBR), and fluororubber; and polysaccharide polymers. The content of the binder in the positive active material layer is preferably 1% by mass or more and 10% by mass or less, more preferably 3% by mass or more and 9% by mass or less.

Examples of the thickener include polysaccharide polymers such as carboxymethylcellulose (CMC) and methylcellulose. When the thickener has a functional group that reacts with lithium, it is preferable to deactivate this functional group by methylation and the like in advance.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide and aluminosilicate, hydroxides such as magnesium hydroxide, calcium hydroxide and aluminum hydroxide, carbonates such as calcium carbonate, hardly soluble ionic crystals of calcium fluoride, barium fluoride, and barium sulfate, nitrides such as aluminum nitride and silicon nitride, and substances derived from mineral resources, such as talc, montmorillonite, boehmite, zeolite, apatite, kaolin, mullite, spinel, olivine, sericite, bentonite and mica, or artificial products thereof.

The intermediate layer is a coating layer on the surface of the positive electrode substrate, and contains conductive particles such as carbon particles to decrease contact resistance between the positive electrode substrate and the positive active material layer. Similarly to the negative electrode, the configuration of the intermediate layer is not particularly limited and can be formed of, for example, a composition containing a resin binder and conductive particles.

### [Nonaqueous electrolyte]

The nonaqueous electrolyte contains a nonaqueous solvent, and a sulfur-based cyclic compound and an electrolyte salt, which are dissolved in the nonaqueous solvent. The nonaqueous solvent contains a fluorinated cyclic carbonate and a chain carbonate. The nonaqueous electrolyte is not limited to a liquid. In other words, the nonaqueous electrolyte includes not only a liquid nonaqueous electrolyte but also a solid nonaqueous electrolyte or a gel nonaqueous electrolyte.

### (Nonaqueous solvent)

The nonaqueous solvent contains a fluorinated cyclic carbonate and a chain carbonate.

By using a chain carbonate as the nonaqueous solvent, the viscosity of the nonaqueous electrolyte can be kept low. Examples of the chain carbonate include diethyl carbonate (DEC), ethyl methyl carbonate (EMC), dimethyl carbonate (DMC), diphenyl carbonate, trifluoroethyl methyl carbonate (TFEMC), and bis(trifluoroethyl) carbonate.

The lower limit of the content of the chain carbonate in the nonaqueous solvent is preferably 30% by volume, more preferably 40% by volume, still more preferably 50% by volume. On the other hand, the upper limit thereof is preferably 80% by volume, more preferably 70% by volume. By setting the content of the chain carbonate in the above range, the charge-discharge cycle performance of the nonaqueous electrolyte energy storage device can be further improved.

The content of the fluorinated cyclic carbonate in the entire solvent of the nonaqueous electrolyte exceeds 20% by volume. On the other hand, the upper limit of the content of the fluorinated cyclic carbonate is preferably 70% by volume, more preferably 50% by volume. As the content of the fluorinated cyclic carbonate contained in the nonaqueous electrolyte is in the above range, continuous reduction and decomposition of the nonaqueous electrolyte on the lithium metal is suppressed, and the amount of gas, which is a decomposition product, generated is diminished. The amount of inactive lithium dendrite, which does not participate in the charge-discharge reaction and is deposited on the lithium metal, is effectively diminished, and thus the discharge capacity retention ratio associated with the charge-discharge cycles can also be increased.

Examples of the fluorinated cyclic carbonate include fluorinated ethylene carbonates such as fluoroethylene carbonate (FEC) and difluoroethylene carbonate, fluorinated propylene carbonates, and fluorinated butylene carbonates. Among these, fluorinated ethylene carbonates are preferable, and fluoroethylene carbonate is more preferable. The fluoroethylene carbonate exhibits high oxidation resistance and has a high effect of suppressing side reactions (oxidative decomposition of nonaqueous solvent and the like) that may occur at the time of charge-discharge of the nonaqueous electrolyte energy storage device. Fluoroethylene carbonate is reduced and decomposed at a relatively noble potential to rapidly form a stable film on the lithium metal and thus can suppress continuous reduction and decomposition of the nonaqueous electrolyte on the lithium metal. Hence, as the fluorinated cyclic carbonate is fluoroethylene carbonate, it is possible to further enhance the effect of suppressing the increase in volume of the nonaqueous electrolyte energy storage device. One of the fluorinated cyclic carbonates may be used singly or two or more of the fluorinated cyclic carbonates may be used in mixture.

The nonaqueous solvent may contain an organic solvent other than a fluorinated cyclic carbonate and a chain carbonate. Examples of another organic solvent include cyclic carbonates other than a fluorinated cyclic carbonate, esters, ethers, amides, lactones, and nitriles. In addition to a sulfur-based cyclic compound contained as an additive, organic solvents containing sulfur such as a sulfone and a sulfate may be contained as a nonaqueous solvent.

Examples of the cyclic carbonates other than the fluorinated cyclic carbonate include ethylene carbonate (EC), propylene carbonate (PC), butylene carbonate (BC), vinylethylene carbonate (VEC), chloroethylene carbonate, styrene carbonate, catechol carbonate, 1-phenylvinylene carbonate, and 1,2-diphenylvinylene carbonate. Examples of the ester include methyl 3,3,3-trifluoropropionate (FMP). Examples of the sulfone include sulfolane (SL), ethyl isopropyl sulfone (EiPSO₂), and ethyl methyl sulfone (EMSO₂). Examples of the sulfide include diethyl sulfide (DES) and dimethyl sulfide (DMS).

### (Sulfur-based cyclic compound)

The nonaqueous electrolyte of the nonaqueous electrolyte energy storage device contains a sulfur-based cyclic compound as an additive. When the nonaqueous electrolyte contains a sulfur-based cyclic compound as an additive, a decomposition reaction of the sulfur-based cyclic compound occurs at an appropriate potential on the lithium metal. Hence, the amount of gas, which is a decomposition product of the nonaqueous electrolyte, generated is diminished, and the increase in volume of the nonaqueous electrolyte energy storage device can be suppressed.

Examples of the sulfur-based cyclic compound include a compound having a sultone structure, a compound having a cyclic sulfate structure, a sulfone, and a sulfite. Among these, a compound having a sultone structure or a cyclic sulfate structure is preferable. When the sulfur-based cyclic compound has the structure, a decomposition reaction occurs at an appropriate potential, and the decomposition product generated by this reaction effectively forms a film on the surface of lithium metal. Hence, the effect of suppressing the increase in volume of the nonaqueous electrolyte energy storage device can be further enhanced. One of the sulfur-based cyclic compounds may be used singly or two or more of the sulfur-based cyclic compounds may be used in mixture.

Examples of the compound having a sultone structure include 1,3-propene sultone, 1,3-propane sultone, 1,4-butane sultone, and 1,4-buten sultone.

Examples of the compound having a cyclic sulfate structure include ethylene sulfate, 1,3-propylene sulfate, 4,4'-bis(2,2-dioxo-1,3,2-dioxathiolane), and a sulfuric acid ester compound represented by the following Formula (1).

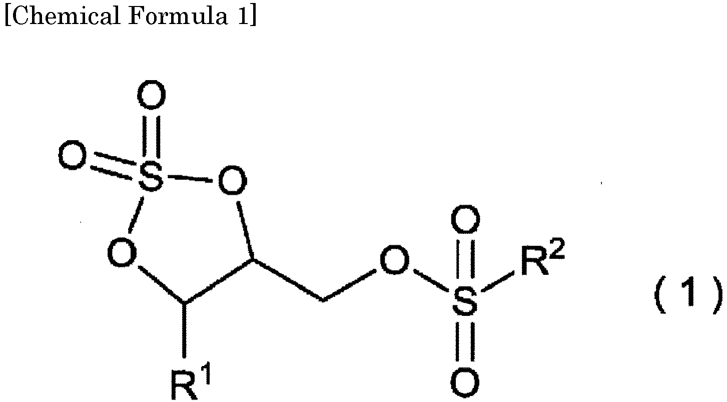

In Formula (1), R¹ and R² are each independently a hydrogen atom or a hydrocarbon group having 1 to 3 carbon atoms.

Examples of the hydrocarbon group having 1 to 3 carbon atoms include an alkyl group that is a methyl group, an ethyl group, a n-propyl group, or an i-propyl group, and an alkenyl group such as a vinyl group.

As R¹, a hydrogen atom is preferable.

As R², a hydrocarbon group having 1 to 3 carbon atoms is preferable, an alkyl group having 1 to 3 carbon atoms is more preferable, and a methyl group is still more preferable.

The lower limit of the content of the sulfur-based cyclic compound in the nonaqueous electrolyte is preferably 0.1% by mass, more preferably 0.3% by mass, still more preferably 0.5% by mass. On the other hand, the upper limit of this content is preferably 10% by mass, more preferably 5% by mass. By setting the content of the sulfur-based cyclic compound to the lower limit or more and the upper limit or less, the effect of suppressing the increase in volume of the nonaqueous electrolyte energy storage device can be further enhanced. The sulfur-based cyclic compound is regarded to be contained in the nonaqueous electrolyte as the additive when the content of the sulfur-based cyclic compound is less than 10% by mass, and the sulfur-based cyclic compound is regarded to be contained in the nonaqueous electrolyte as the nonaqueous solvent when the content of the sulfur-based cyclic compound is 10% by mass or more.

### (Electrolyte salt)

As the electrolyte salt, it is possible to use a known electrolyte salt usually used as an electrolyte salt of a general nonaqueous electrolyte energy storage device. Examples of the electrolyte salt include a lithium salt, a sodium salt, a potassium salt, a magnesium salt, and an onium salt, and a lithium salt is preferable.

Examples of the lithium salt include inorganic lithium salts such as LiPF₆, LiPO₂F₂, LiBF₄, LiClO₄, and LiN(SO₂F)₂, and lithium salts having a fluorinated hydrocarbon group, such as LiSO₃CF₃, LiN(SO₂CF₃)₂, LiN(SO₂C₂F₅)₂, LiN(SO₂CF₃)(SO₂C₄F₉), LiC(SO₂CF₃)₃ and LiC(SO₂C₂F₅)₃. Among these, an inorganic lithium salt is preferable, and LiPF₆ is more preferable.

The lower limit of the content of the electrolyte salt in the nonaqueous electrolyte is preferably 0.1 mol dm⁻³, more preferably 0.3 mol dm⁻³, still more preferably 0.5 mol dm⁻³. On the other hand, the upper limit thereof is not particularly limited but is preferably 3 mol dm⁻³, more preferably 2 mol dm⁻³.

### (Other additives and the like)

The nonaqueous electrolyte may contain additives other than the sulfur-based cyclic compound and the electrolyte salt as long as the effects of the present invention are not impaired. Examples of the other additives include various additives contained in general nonaqueous electrolyte energy storage devices. The total content of the other additives in the nonaqueous electrolyte is preferably 10% by mass or less, more preferably 5% by mass or less.

The nonaqueous electrolyte can usually be obtained by adding and dissolving the respective components such as the sulfur-based cyclic compound and the electrolyte salt in the nonaqueous solvent.

### [Separator]

As the separator, for example, a woven fabric, a nonwoven fabric, a porous resin film, and the like are used. Among these, a porous resin film is preferable from the viewpoint of strength, and a nonwoven fabric is preferable from the viewpoint of liquid retaining property of the nonaqueous electrolyte. As a main component of the separator, for example, a polyolefin such as polyethylene or polypropylene is preferable from the viewpoint of strength, and for example, polyimide or aramid is preferable from the viewpoint of resistance to oxidative decomposition. These resins may be composited.

An inorganic layer may be disposed between the separator and the electrodes (usually, the positive electrode). This inorganic layer is a porous layer, which is also called a heat resistant layer and the like. A separator having an inorganic layer formed on one surface of a porous resin film can also be used. The inorganic layer is usually composed of inorganic particles and a binder and may contain other components.

### [Specific configuration of energy storage device]

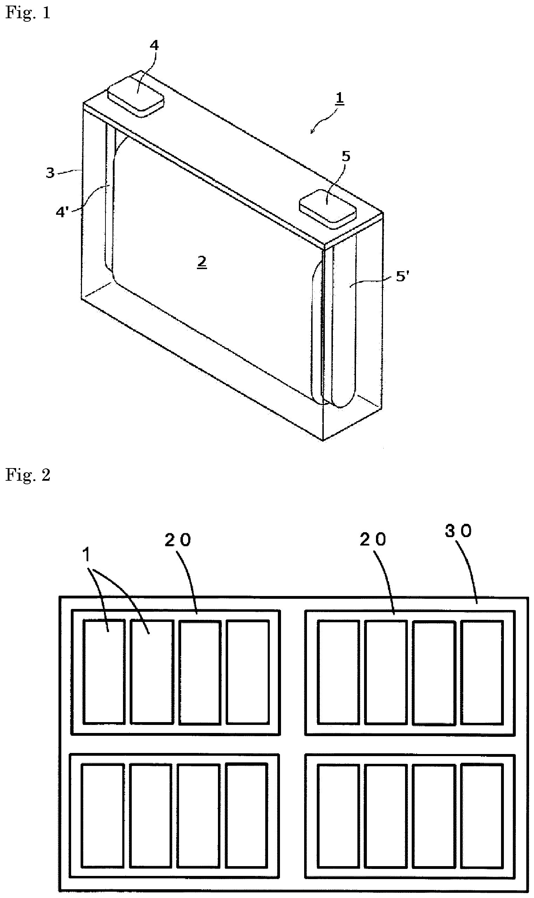

Fig. 1 is a schematic view of a rectangular nonaqueous electrolyte energy storage device 1 (nonaqueous electrolyte secondary battery), which is an embodiment of the nonaqueous electrolyte energy storage device according to the present invention. Fig. 1 is a view illustrating the inside of a case 3 in a perspective manner. In the nonaqueous electrolyte energy storage device 1 illustrated in Fig. 1, an electrode assembly 2 is housed in the case 3. The electrode assembly 2 is formed by winding a positive electrode including a positive active material layer and a negative electrode including a negative active material layer with a separator interposed therebetween. The positive electrode is electrically connected to a positive electrode terminal 4 via a positive current collector 4', and the negative electrode is electrically connected to a negative electrode terminal 5 via a negative current collector 5'. A nonaqueous electrolyte is injected in the case 3.

The shape of the nonaqueous electrolyte energy storage device according to the present invention is not particularly limited, and examples thereof include cylindrical batteries, prismatic batteries (rectangular batteries), and flat batteries.

### <Method of fabricating nonaqueous electrolyte energy storage device>

The method of fabricating the nonaqueous electrolyte energy storage device according to the present embodiment can be appropriately selected from known methods. The fabrication method includes, for example, a step of preparing an electrode assembly, a step of preparing a nonaqueous electrolyte, and a step of housing the electrode assembly and the nonaqueous electrolyte in a case. The step of preparing an electrode assembly includes a step of preparing a positive electrode and a negative electrode and a step of forming an electrode assembly by stacking or winding the positive electrode and the negative electrode with a separator interposed therebetween.

In the step of housing the nonaqueous electrolyte in a case, the method can be appropriately selected from known methods. For example, when a liquid nonaqueous electrolyte (also referred to as "electrolyte solution") is used, the electrolyte solution may be injected through the injection port formed in the case and then the injection port may be sealed. The details of the respective other elements configuring the energy storage device obtained by the fabrication method are as described above.

### [Other embodiments]

The nonaqueous electrolyte energy storage device according to the present invention is not limited to the embodiment described above, and various changes may be made without departing from the gist of the present invention. For example, the configuration according to one embodiment can be added to the configuration according to another embodiment, or a part of the configuration according to one embodiment can be replaced with the configuration according to another embodiment or a well-known technique. Furthermore, a part of the configuration according to one embodiment can be removed. In addition, a well-known technique can be added to the configuration according to one embodiment.

In the embodiment, the nonaqueous electrolyte energy storage device has been described mainly in the form of a nonaqueous electrolyte secondary battery, but the nonaqueous electrolyte energy storage device may be other energy storage devices. Examples of the other energy storage devices include capacitors (electric double-layer capacitors and lithium ion capacitors). Examples of the nonaqueous electrolyte secondary battery include a lithium ion nonaqueous electrolyte secondary battery.

The energy storage apparatus according to an embodiment of the present invention (hereinafter referred to as "second embodiment") includes a plurality of nonaqueous electrolyte energy storage devices according to the above embodiment. An assembled battery can be configured by using one or a plurality of nonaqueous electrolyte energy storage devices (cells) according to the above embodiment, and further an energy storage apparatus according to the second embodiment can be configured by using this assembled battery. The energy storage apparatus according to the second embodiment can be used as a power source for motor vehicles such as electric vehicles (EV), hybrid electric vehicles (HEV), and plug-in hybrid electric vehicles (PHEV). The energy storage apparatus can be used for various power source apparatuses such engine starting power source apparatuses, auxiliary power source apparatuses, and uninterruptible power systems (UPSs).

Fig. 2 illustrates an example of an energy storage apparatus 30 according to the second embodiment, formed by further assembling energy storage units 20 in each of which two or more electrically connected nonaqueous electrolyte energy storage devices 1 are assembled. The energy storage apparatus 30 may include a bus bar (not illustrated) that electrically connects two or more nonaqueous electrolyte energy storage devices 1 to each other and a bus bar (not illustrated) that electrically connects two or more energy storage units 20 to each other. The energy storage unit 20 or the energy storage apparatus 30 may include a state monitor (not illustrated) that monitors the state of one or more nonaqueous electrolyte energy storage devices.

### (Measurement of volume of nonaqueous electrolyte energy storage device)

In the specification of the present application, the volume of the nonaqueous electrolyte energy storage device is measured by the following method. At 25°C, the mass W1 of a beaker containing 500 ml of ion-exchange water is recorded. Next, the nonaqueous electrolyte energy storage device to be measured is immersed in the ion-exchange water in a suspended state. At this time, the position is adjusted so that the entire nonaqueous electrolyte energy storage device is immersed and the nonaqueous electrolyte energy storage device does not come into contact with the bottom surface or side surface of the beaker. The mass W2 at this time is recorded. The volume of the nonaqueous electrolyte energy storage device is determined by dividing the difference in mass (W2 - W1) by the density of water at 25°C.

### EXAMPLES

Hereinafter, the present invention will be described in more detail with reference to Examples, but the present invention is not limited to the following Examples.

The respective additives used in Examples and Comparative Examples are presented below.
(1) 1,3-Propene sultone
(2) 4,4'-Bis(2,2-dioxo-1,3,2-dioxathiolane)
(3) Sulfuric acid ester compound (A) represented by the following Formula (A) 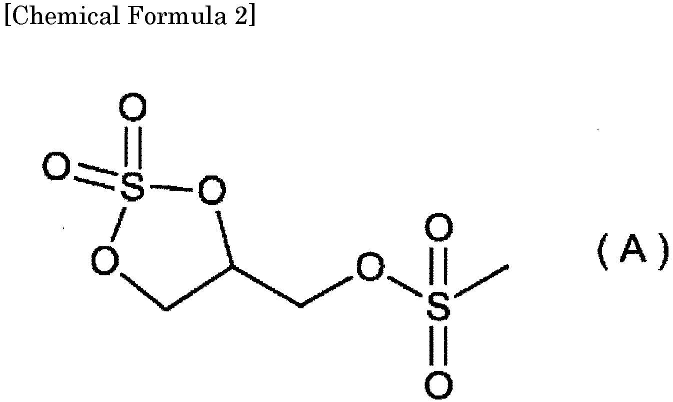
(4) Lithium difluoro oxalate borate (LiDFOB)
(5) Vinylene carbonate
(6) Lithium difluorophosphate (LiDFP)

### [Example 1]

### (Preparation of nonaqueous electrolyte)

A solution was prepared in which LiPF₆ was dissolved in a mixed solvent of fluoroethylene carbonate (FEC) and ethylmethyl carbonate (EMC) mixed at a volume ratio of FEC : EMC = 30 : 70 at a concentration of 1 mol dm⁻³. Further, 1,3-propene sultone was added to the solution at 2% by mass to prepare a nonaqueous electrolyte.

### (Fabrication of positive electrode)

As a positive active material, a lithium-transition metal composite oxide, which had an α-NaFeO₂-type crystal structure and was represented by Li_{1+α}Me_{1-α}O₂ (Me was a transition metal), was used. Here, the molar ratio Li/Me of Li to Me is 1.33, and Me is composed of Ni and Mn and is contained at a molar ratio of Ni : Mn = 1 : 2.

A positive electrode paste, which contained the positive active material, acetylene black (AB) as a conductive agent, and polyvinylidene fluoride (PVdF) as a binder at a mass ratio of 94 : 4.5 : 1.5, was prepared using N-methylpyrrolidone (NMP) as a dispersion medium. The positive electrode paste was applied to one surface of an aluminum foil having a thickness of 15 µm as a positive electrode substrate, and dried, and the resultant was pressed and cut to fabricate a positive electrode having a positive active material layer disposed in a rectangular shape having a width of 30 mm and a length of 40 mm. The thickness of the positive active material layer is about 100 µm, and the positive composite is contained per unit area at 14 mg/cm². The positive electrode was dried under reduced pressure at 120°C for 14 hours or more and then used.

### (Fabrication of negative electrode)

A lithium metal plate having a width of 30 mm, a length of 42 mm, and a thickness of 600 µm was used as the negative electrode plate. The lithium metal plates were pressed at a pressure of 1.4 MPa with a metal resin composite film interposed therebetween and had a metallic luster. A stainless steel negative electrode substrate was connected only to the end having a length of 5 mm of the lithium metal plate.

### (Fabrication of nonaqueous electrolyte energy storage device)

A 27 µm thick polypropylene microporous membrane, of which the surface was modified with a polyacrylate, was used as a separator. By stacking four sheets of the separators and fusing the surroundings with one side left, a bag-shaped separator having three bag portions was fabricated. The negative electrode was inserted into the central bag portion of the bag-shaped separator, and two sheets of the positive electrodes were inserted into the bag portions on both sides of the central bag portion so that the surfaces on which the positive active material layer was disposed faced the negative electrode. A laminated electrode group having two facing surfaces of positive and negative electrodes was thus fabricated.

The electrode group was housed in the metal resin composite film as a case so that the open ends of the lead terminals, each of which had been connected to the positive electrode or the negative electrode in advance, were exposed to the outside, the metal resin composite film was sealed except for the portion to be the electrolyte solution filling hole, the nonaqueous electrolyte was injected, and then the electrolyte solution filling hole was hermetically sealed. A nonaqueous electrolyte energy storage device was thus fabricated.

Here, the capacity per unit area of the negative electrode is about 15 times the capacity per unit area of the facing positive electrode.

### [Examples 2 to 9 and Comparative Examples 1 to 8]

Nonaqueous electrolyte energy storage devices of Examples 2 to 9 and Comparative Examples 1 to 8 were obtained similarly to Example 1 except that the kinds and amounts of solvents and additives used were set as presented in Table 1. Hereinafter, "-" in the table indicates that the corresponding additive is not used.

### [Reference Example 1 to Reference Example 3]

Graphite was used as the negative active material. A negative electrode paste, which contained graphite : styrene-butadiene rubber : carboxymethylcellulose at a mass ratio of 96.7 : 2.1 : 1.2 (in terms of solid content), was prepared using water as a dispersion medium. This negative electrode paste was applied to both surfaces of a strip-shaped copper foil current collector as a negative electrode substrate so that the negative composite was contained per unit area at 10 mg/cm², and dried. This was pressed by a roller press to form a negative active material layer, and then dried under reduced pressure at 80°C for 14 hours to remove water content in the negative electrode. Nonaqueous electrolyte energy storage devices of Reference Examples 1 to 3 were obtained similarly to Example 1 except that the negative electrodes thus obtained were used and the kinds and amounts of the solvents and additives used were set as presented in Table 1.

The volume of the obtained respective nonaqueous electrolyte energy storage devices before the initial charge-discharge was measured by the method described above.

### (Initial charge-discharge)

The obtained respective nonaqueous electrolyte energy storage devices were subjected to the initial charge-discharge under the following conditions. Constant current charge was performed at 25°C to 4.60 V at a charge current of 0.1 C, and then constant voltage charge was performed at 4.60 V With regard to the charge termination conditions, charge was performed until the charge current reached 0.05 C. After charge, a pause time of 10 minutes was provided, and then constant current discharge was performed at 25°C to 2.00 V at a discharge current of 0.1 C.

### (Initial capacity confirmation test)

After the initial charge-discharge, an initial capacity confirmation test was performed under the following conditions. Constant current charge was performed at 25°C to 4.60 V at a charge current of 0.1 C, and then constant voltage charge was performed at 4.60 V. With regard to the charge termination conditions, charge was performed until the charge current reached 0.05 C. After charge, a pause time of 10 minutes was provided, and then constant current discharge was performed at 25°C to 2.00 V at a discharge current of 1.0 C. The discharge capacity obtained in this test was taken as the "initial discharge capacity".

For the negative electrodes, in which graphite was used as the negative active material, of Reference Examples 1 to 3, the initial charge-discharge and initial capacity confirmation test were performed similarly to the above except that constant current charge was performed at 25°C to 4.50 V at a charge current of 0.1 C and then constant voltage charge was performed at 4.50 V.

### (Charge-discharge cycle test)

Subsequently, the following charge-discharge cycle test was performed. At 25°C, constant current constant voltage charge was performed at a charge current of 0.33 C and an end-of-charge voltage of 4.60 V. With regard to the charge termination conditions, charge was performed until the charge current reached 0.05 C. Thereafter, a pause time of 10 minutes was provided. Thereafter, constant current discharge was performed at a discharge current of 0.33 C and an end-of-discharge voltage of 2.00 V, and then a pause time of 10 minutes was provided. This charge-discharge was performed 50 cycles.

For the nonaqueous electrolyte energy storage devices, in which graphite was used as the negative active material, of Reference Examples 1 to 3, the end-of-charge voltage is 4.50 V in the initial capacity confirmation test and the charge-discharge cycle test.

Thereafter, the discharge capacity confirmation test after the charge-discharge cycle test was performed by a similar method to that for the initial capacity confirmation test. The discharge capacity obtained in this test was taken as the discharge capacity after charge-discharge cycles. The percentage of the discharge capacity after a charge-discharge cycle test with respect to the initial discharge capacity was taken as the "capacity retention ratio after 50 cycles". For the respective nonaqueous electrolyte energy storage devices after the capacity confirmation test in a state where the discharge was terminated, the volume was measured by the method described above, and the difference between this volume and the volume before the initial charge-discharge was calculated and taken as the amount of increase in volume.

The initial discharge capacity, the discharge capacity retention ratio after 50 cycles, and the amount of increase in volume are presented in Table 1.

**[Table 1]**

| | Composition of nonaqueous electrolyte | | | | Negative active material | Evaluation | | |
|---|---|---|---|---|---|---|---|---|
| | Electrolyte solvent [% by volume] | Additive [% by mass] | | Content of electrolyte salt (LiPF₆) [mol dm⁻³] | | Amount of increase in volume [cm³] | Initial discharge capacity [mAh] | Discharge capacity retention ratio after 50 cycles [%] |
| Example 1 | FEC/EMC =30/70 | 1,3-Propene sultone | 2.0 | 1.0 | Lithium metal | 0.041 | 72 | 100 |
| Example 2 | FEC/PC/EMC =30/20/50 | 1,3-Propene sultone | 2.0 | 1.0 | Lithium metal | 0.036 | 73 | 100 |
| Example 3 | FEC/EMC =30/70 | 1,3-Propene sultone | 2.0 | 1.0 | Lithium metal | 0.024 | 74 | 100 |
| | | 4,4'-Bis(2,2-dioxo-1,3,2-dioxathi olane) 1.0 | | | | | | |
| Example 4 | FEC/EMC =30/70 | 1,3-Propene sultone | 2.0 | 1.0 | Lithium metal | 0.008 | 74 | 100 |
| | | Sulfuric acid ester compound (A) | 1.0 | | | | | |
| Example 5 | FEC/EMC =30/70 | 1,3-Propene sultone | 2.0 | 1.5 | Lithium metal | 0.046 | 74 | 100 |
| Example 6 | FEC/SL/EMC =30/20/50 | 1,3-Propene sultone | 2.0 | 1.0 | Lithium metal | 0.031 | 74 | 100 |
| Example 7 | FEC/DES/EMC =30/20/50 | 1,3-Propene sultone | 2.0 | 1.0 | Lithium metal | 0.040 | 74 | 100 |
| Example 8 | FEC/EiPSO₂/EMC =30/20/50 | 1,3-Propene sultone | 2.0 | 1.0 | Lithium metal | 0.040 | 74 | 100 |
| Example 9 | FEC/TFEMC =30/70 | 1,3-Propene sultone | 2.0 | 1.0 | Lithium metal | 0.072 | 74 | 100 |
| Comparative Example 1 | FEC/EMC =30/70 | - | | 1.0 | Lithium metal | 0.128 | 72 | 100 |
| Comparative Example 2 | FEC/EMC =30/70 | LiDFOB | 0.5 | 1.0 | Lithium metal | 0.136 | 72 | 100 |
| Comparative Example 3 | EC/EMC =30/70 | 1,3-Propene sultone | 2.0 | 1.0 | Lithium metal | 0.135 | 72 | 69 |
| Comparative Example 4 | EC/PC/EMC =25/5/70 | Vinylene carbonate | 0.2 | 1.0 | Lithium metal | 0.107 | 75 | 77 |
| | | LiDFP | 0.5 | | | | | |
| Comparative Example 5 | FEC/EMC =10/90 | 1,3-Propene sultone | 2.0 | 1.0 | Lithium metal | 0.172 | 72 | 20 |
| Comparative Example 6 | FEC/EMC =20/80 | 1,3-Propene sultone | 2.0 | 1.0 | Lithium metal | 0.178 | 72 | 21 |
| Comparative Example 7 | PC/EMC =30/70 | - | | 1.0 | Lithium metal | 0.183 | 74 | 32 |
| Comparative Example 8 | FEC/PC/EMC =10/20/70 | 1,3-Propene sultone | 2.0 | 1.0 | Lithium metal | 0.138 | 72 | 42 |
| Reference Example 1 | EC/PC/EMC =25/5/70 | Vinylene carbonate | 0.2 | 1.0 | Graphite | 0.005 | 66 | 96 |
| | | LiDFP | 0.5 | | | | | |
| Reference Example 2 | FEC/EMC =50/70 | - | | 1.0 | Graphite | 0.109 | 66 | 97 |
| Reference Example 3 | FEC/EMC =30/70 | 1,3-Propene sultone | 2.0 | 1.0 | Graphite | 0.086 | 66 | 97 |

As presented in Table 1 above, it has been confirmed that the effect of suppressing the increase in volume is high in the nonaqueous electrolyte energy storage devices according to Examples 1 to 9, which contains a nonaqueous electrolyte in which the content of the fluorinated cyclic carbonate in the entire solvent of the nonaqueous electrolyte exceeds 20% by volume and the sulfur-based cyclic compound is contained as an additive.

In contrast, the effect of suppressing the increase in volume is inferior in the nonaqueous electrolyte energy storage devices according to Comparative Examples 1 to 8, which contains a nonaqueous electrolyte in which the content of the fluorinated cyclic carbonate is 20% by volume or less or the sulfur-based cyclic compound is not contained. From this fact, it can be seen that the effect of suppressing the increase in volume in the charge-discharge cycles of a nonaqueous electrolyte energy storage device including a negative electrode having a negative active material layer containing lithium metal is improved for the first time by combining both requirements that the content of the fluorinated cyclic carbonate in the entire solvent of the nonaqueous electrolyte exceeds 20% by volume and the sulfur-based cyclic compound is contained as an additive.

Next, when the discharge capacity retention ratios after 50 cycles in Example 1, Comparative Example 1, Comparative Example 2, Comparative Example 5, and Comparative Example 6 are compared with one another, it can be seen that the discharge capacity retention ratio after 50 cycles is improved as the content of the fluorinated cyclic carbonate in the entire solvent of the nonaqueous electrolyte exceeds 20% by volume.

On the other hand, in Reference Examples 1 to 3 in which graphite is used as the negative active material, as can be seen by comparing Reference Example 2 and Reference Example 3 with each other, the effect of suppressing the increase in volume, which is exerted by combining the requirements that the content of the fluorinated cyclic carbonate in the entire solvent of the nonaqueous electrolyte exceeds 20% by volume and the sulfur-based cyclic compound is contained as an additive, is low.

Furthermore, when Reference Example 3 and Example 1, in which a nonaqueous electrolyte is used in which the content of the fluorinated cyclic carbonate in the entire solvent of the nonaqueous electrolyte exceeds 20% by volume and the sulfur-based cyclic compound is contained as an additive, are compared with Reference Example 1 and Comparative Example 4, in which vinylene carbonate and LiDFP, which are known to be easily decomposed at a base potential, are used as additives, Comparative Example 4, in which lithium metal is used as the negative active material, does not have an effect of suppressing the increase in volume as compared with Example 1 but Reference Example 1, in which graphite is used as the negative active material, has a higher effect of suppressing the increase in volume as compared with Reference Example 3. This suggests that the mechanism of action of the effect of suppressing the increase in volume in the charge-discharge cycles in a nonaqueous electrolyte energy storage device including a negative electrode having a negative active material layer containing graphite as a negative active material is significantly different from that in a nonaqueous electrolyte energy storage device including a negative electrode having a negative active material layer containing lithium metal as a negative active material. This is considered to be related to the fact that a film, which is derived from vinylene carbonate and LiDFP and is formed on graphite at the time of initial charge is continuously and stably present during the charge-discharge cycles as well, the continuous generation of gas due to the electrochemical reduction and decomposition of the nonaqueous electrolyte is suppressed, and thus the increase in volume of the nonaqueous electrolyte energy storage device can be suppressed in a nonaqueous electrolyte energy storage device including a negative electrode having a negative active material layer containing graphite as a negative active material, but a film, which is derived from vinylene carbonate and LiDFP and is generated during the charge-discharge cycles, is slowly formed on the active lithium metal, thus continuous generation of gas due to the reduction and decomposition of the nonaqueous electrolytes occurs on the lithium metal, and this is the main cause of the increase in volume in a nonaqueous electrolyte energy storage device including a negative electrode having a negative active material layer containing lithium metal as a negative active material.

As a result of the above, it has been indicated that the nonaqueous electrolyte energy storage device has an excellent effect of suppressing the increase in volume in the charge-discharge cycles of a nonaqueous electrolyte energy storage device including a negative electrode having a negative active material layer containing lithium metal and this effect is based on a unique mechanism of action that the effect is selectively exerted on a negative electrode containing lithium metal as a negative active material.

### INDUSTRIAL APPLICABILITY

The present invention can be applied to a nonaqueous electrolyte energy storage device and an energy storage apparatus, which are used as a power source for electronic devices such as personal computers and communication terminals, motor vehicles, and the like.

### DESCRIPTION OF REFERENCE SIGNS

1: nonaqueous electrolyte energy storage device
2: electrode assembly
3: case
4: positive electrode terminal
4': positive electrode lead
5: negative electrode terminal
5': negative electrode lead
20: energy storage unit
30: energy storage apparatus

## Claims

1. A nonaqueous electrolyte energy storage device comprising a negative electrode, a positive electrode, and a nonaqueous electrolyte,
wherein the negative electrode includes a negative active material layer containing lithium metal,
the nonaqueous electrolyte contains a fluorinated cyclic carbonate, a chain carbonate, and a sulfur-based cyclic compound, and
a content of the fluorinated cyclic carbonate in entire solvent of the nonaqueous electrolyte exceeds 20% by volume.

2. The nonaqueous electrolyte energy storage device according to claim 1, wherein the fluorinated cyclic carbonate is fluoroethylene carbonate.

3. The nonaqueous electrolyte energy storage device according to claim 1 or 2, wherein the sulfur-based cyclic compound is a compound having a sultone structure or a cyclic sulfate structure.

4. An energy storage apparatus comprising a plurality of the nonaqueous electrolyte energy storage devices according to any one of claims 1 to 3.
